# EUROPEAN PATENT APPLICATION

(11) **EP 2 020 520 A1**
(43) Date of publication of application: **04.02.2009**
(21) Application number: 07015001.6
(22) Date of filing: 31.07.2007
(51) Int. Cl.: F16D 41/28

(54) **Free wheel device**

(71) Applicant: Ferrari, Dionigi, 24053 Brignano G. D'Adda (BG) (IT)
(72) Inventor: Ferrari, Dionigi, 24053 Brignano G. D'Adda (BG) (IT)
(74) Representative: Trupiano, Federica

(57) **Abstract**

Freewheel system for the hub (1) of a bicycle or similar vehicle provided with a body (6), in the form of a hollow cylinder, and one-way rolling means inside the body, which comprise at least one one-way drawn cup roller clutch (5), mounted removably to one end of the hub (1).

## Description

The present invention relates to a freewheel system to be inserted on the rear hub of a bicycle or the like.

The bicycle is one of the most widely studied means of transport and over the years it has undergone a series of modifications aimed at alleviating the cyclist's effort.

In particular, in recent years the motion transmission system, from the pedals to the wheel, has undergone several innovations. Varying the gear ratio means using toothed wheels or gears with different number of teeth according to requirements related to the difficulty of the route.

These gears, called sprockets and having different dimensions, are placed in the centre, normally on the right side, of the rear wheel of the bicycle, the rotational movement of which is permitted by the hub, the component which acts as pivot for the wheel.

The rear hub of the bicycle is essentially composed of three parts:
- the hub axle, which is a hollow cylinder threaded at the ends, on which the weights and strains to which the hub is subjected are concentrated and which is fastened to the frame with a quick latch assembly;
- the body of the hub, which is the structure through which the axle passes and in which the bearings that allow rotation are housed;
- the freewheel body, which is a hollow cylinder, containing the freewheel mechanism connected directly to the hub, on which the sprockets are inserted.

The body of the hub has two disc-shaped projections called flanges, to which the spokes are attached, i.e. the bars connecting the body of the hub to the rim.

While the hub axle never moves with respect to the bicycle, the body of the hub, integral with the rim and consequently with the tyre, moves to rotate and allow the bicycle to advance.

The freewheel mechanism is normally housed in a specific body, or bushing, i.e. a hollow cylindrical shaped body, located on the hub of the rear wheel.

The freewheel is a mechanism applied to the majority of bicycles which allows decoupling of the movement between the sprocket, or cassette sprockets when there is more than one, and the rear wheel. In this manner an integral movement is only permitted when the sprocket is rotated in the direction of movement, while in the opposite direction no movement is produced on the wheel, which continues its movement by inertia. This fact is of fundamental importance, as the freewheel allows back-pedalling or even allows the cyclist to stop pedalling without interfering with the movement of the bicycle itself.

In current use, the one-way movement of the freewheel body is obtained by means of a pawl system inserted on a cylinder inside the body, known as pawl carrier and fastened to the hub, and on which the body rotates. The pawl carrier cylinder, which is provided with a shaped portion cooperating with a complementary portion on the hub, requires a lock nut inside the hub and hollow to allow the axle to pass through. The mechanism is based on the use of pawls located on the pawl carrier cylinder which, thrust by springs, are raised and engaged in specific teeth inside the body when the sprocket rotates in the direction that generates movement of the bicycle, while they are lowered when the body with the internal teeth is not moving or rotates in the opposite direction to movement during back-pedalling.

The invention of the freewheel has considerably facilitated development of the equipment suitable to change the gear ratio, thereby permitting use of the rear derailleur and consequently variation in the ratio without the user being required to stop the bicycle.

The use of the rear derailleur gives the cyclist the possibility of choosing between a specific number of gears with a specific cassette sprockets, but the cyclist may also need to change the cassette sprockets according to the specific itinerary or route.

However, in order to perform periodic maintenance on the freewheel and/or to change the cassette sprockets, they must be removed from the wheel hub.

Although many hub manufacturers have attempted to simplify as much as possible the removal of the cassette sprockets and of the freewheel body itself, the process is still somewhat laborious and requires special tools.

According to prior art, to change the cassette sprockets and/or perform maintenance on the freewheel body it is firstly necessary to remove the wheel of the bicycle by unscrewing the pin of the quick release lever that passes through the hub axle and which is required to clamp the hub to the fork of the bicycle.

Therefore, the hub axle must be removed taking care over the components of the rotation mechanism which is based on a ball system, contained in bearings or a cone and counter-cone system.

At this point, to allow other gear ratios to be used, the individual gears can be removed from the cassette sprockets and a new cassette created, or the freewheel body, on which the cassette sprockets is inserted, can be removed to facilitate changing of the various gears and to perform maintenance on the freewheel itself.

The individual gears of the cassette sprockets can be removed after removing the lock ring, which must be unscrewed using tools, a sprocket remover and a special release wrench, which are specific for the type of freewheel used. The sprocket remover is used to hold the cassette sprockets still while unscrewing the lock ring, with a relatively high torque due to the high resistance offered, using the special release wrench.

Removal of the cassette sprockets is a process which must be performed with care, complying with the order and sequence of the individual gears and of the respective spacer rings or spacers.

To remove the freewheel body from the body of the hub, once the axle has been extracted, it is necessary to remove a screw inside the body of the hub that fastens one end of the pawl carrier cylinder to said body of the hub. This operation is performed by inserting a special wrench inside the body of the hub on the opposite side to the freewheel body.

Therefore, freewheel bodies according to prior art have various disadvantages.

Firstly, removal and re-assembly of the cassette sprockets is complicated due to the high torques to be applied and to the need of using special tools.

The gears of the cassette sprockets can only be changed after having removed some fastening components which lock the rotation mechanisms and the hub axle. Moreover, changing these gears is a relatively awkward operation as it must be performed while the freewheel body is fastened to the body of the hub.

The freewheel body can in turn be removed, but not in a simple manner as this operation implies removal of a screw inside the body of the hub, using a specific wrench to be inserted in the body of the hub on the opposite side to the freewheel body.

Moreover, the use of a freewheel body with a pawl system is noisy when it rotates in the opposite direction to movement during back-pedalling.

The freewheel body according to the invention solves the problems set forth above by providing a freewheel system which can be applied directly to the hub in a simple and smooth manner, without requiring the use of pawls and without any type of fastening to the body of the hub, because the housing for the freewheel body and the body of the hub result in a single component.

The object of the present invention is to provide a cylindrical mechanical device which can be used as freewheel body and which is easily removable, to allow smooth and rapid changing of the cassette sprockets mounted thereon.

Another object of the present Invention is to provide a freewheel body which is not fastened to the hub and which is removable without the need to apply high strengths and use specific tools.

A further object of the present invention is to eliminate the noise of the pawl system caused by knocking thereof against the teething inside the body when this rotates in the opposite direction to movement, for example during back-pedalling.

Yet a further object of the present invention is to provide various freewheel bodies each with a different cassette sprockets already mounted to make replacement of the body as quick as possible, changing the body and the cassette sprockets at the same time.

These and yet other objects and relative advantages which will be more apparent from the description below are achieved by the present invention, which relates to a freewheel system for the hub of a bicycle or similar vehicle provided with a body, in the form of a hollow cylinder, and one-way rolling means inside the body, characterized in that said one-way rolling means comprise at least one one-way drawn cup roller clutch, mounted removably to one end of the hub.

The use of a one-way drawn cup roller clutch allows the entire cassette sprockets to be removed extremely easily together with the freewheel body.

According to a preferred aspect of the present invention, the freewheel body has one-way rolling means comprising two one-way drawn cup roller clutches, mounted side by side along the rotation axis thereof. In this manner, the freewheel body meshes optimally on the axle of the hub to guarantee, during pedalling, adequate adherence between the body and the hub axle.

According to another preferred aspect of the present invention, the one-way drawn cup roller clutch is inserted directly in the body and the body is mounted directly on a portion of the hub.

According to another preferred aspect of the present invention the hub comprises a housing and said housing is resulting as a single component with the body of the hub.

According to another preferred aspect of the present invention a ring is positioned between said housing and the body for insertion of at least one ball bearing.

According to another preferred aspect of the present invention, said one-way drawn cup roller clutches, available on the market, are provided with outer rings with lock ramps, cages for needle roller bearings, needle rollers and pressure springs to lock the individual needle roller.

According to an advantageous aspect of the present invention, the freewheel body is mounted directly on the axis of the hub without the use of any type of mechanical fastening with respect to the hub, thus facilitating its removal when this is required.

According to another advantageous aspect of the present invention, removal and reassembly of the cassette sprockets is simple, does not require great physical efforts by the user and does not involve the use of specific tools.

According to another advantageous aspect of the present invention, changing the gears of the cassette sprockets, according to the route, can be easily performed by the user as the freewheel body is not fixed to the body of the hub and can thus be easily removed.

According to another advantageous aspect of the present invention spring locking of each needle roller guarantees constant contact between hub, needle roller and lock ramps.

According to a further advantageous aspect of the present invention the use of one-way drawn cup roller clutches eliminates the problem of noise due to the pawl system knocking against the teeth inside the body when this rotates in the opposite direction to the movement during back-pedalling.

With respect to prior art, the advantages of the embodiments according to the present invention, besides economical, relate to practicality and functionality, as a freewheel system is provided which is capable of guaranteeing both easy removal and sufficient adherence during movement.

Therefore, the object of the present invention solves the problem of utilizing freewheel systems that require to be mechanically fastened to the body of the hub, and which are complicated to remove, by means of the use of at least one one-way drawn cup roller clutch, mounted removably to one end of the hub.

A non-limiting example of a freewheel body according to the invention is described below with reference to the accompanying figures, in which:
Figure 1 is a perspective view of the hub, of the freewheels and of the body of an embodiment according to the invention;
Figure 2 is a perspective view of the freewheels and of the body of an embodiment according to the invention;
Figure 3 is a side and sectional view of the hub and of the freewheels and of the body of an embodiment according to the invention, on which the cassette sprockets is mounted; and
Figure 4 is a schematic perspective view of a component of the body according to the invention.

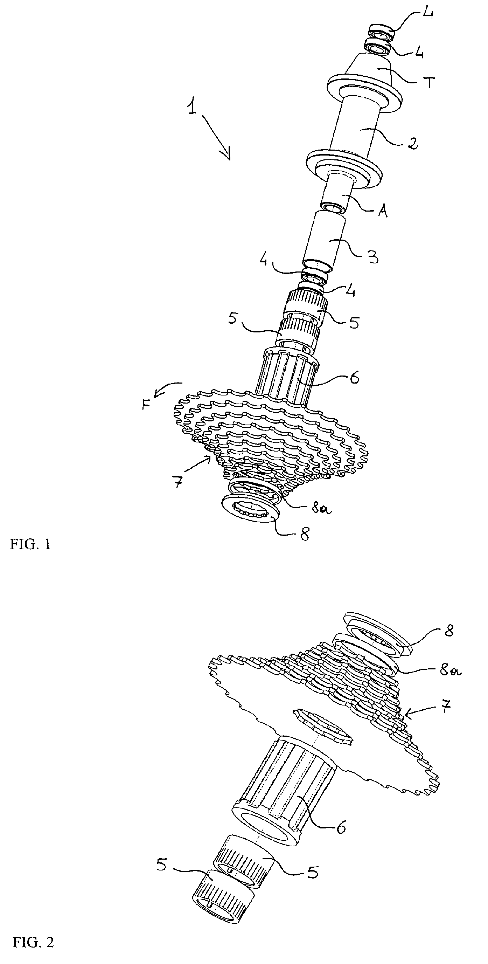

With reference firstly to Figure 1, a bicycle hub 1 according to a preferred embodiment of the invention comprises a hollow body 2 with housing A, a bearing carrier 3, at least two ball bearings 4, at least one and preferably at least two one-way drawn cup roller clutches 5 and a body 6.

The body 2 of the hub 1 has a truncated cone shaped end T and a cylindrical end, or housing A, on which a bearing carrier 3 is inserted. At least one ball bearing 4, employed as rotation mechanism between the body 2 of the hub and the hub axle (not shown) is provided in the final part of the truncated cone shaped end T and of the bearing carrier 3.

The bearing carrier 3 is preferably made of a harder material than the rollers of the one-way drawn cup roller clutch 5; a suitable material is hardened steel.

Figure 2 shows a perspective view of the body 6 according to the invention, which externally houses the cassette sprockets 7 and internally houses two one-way drawn cup roller clutches 5, which allow one-way rolling of the body 6 during movement of the bicycle.

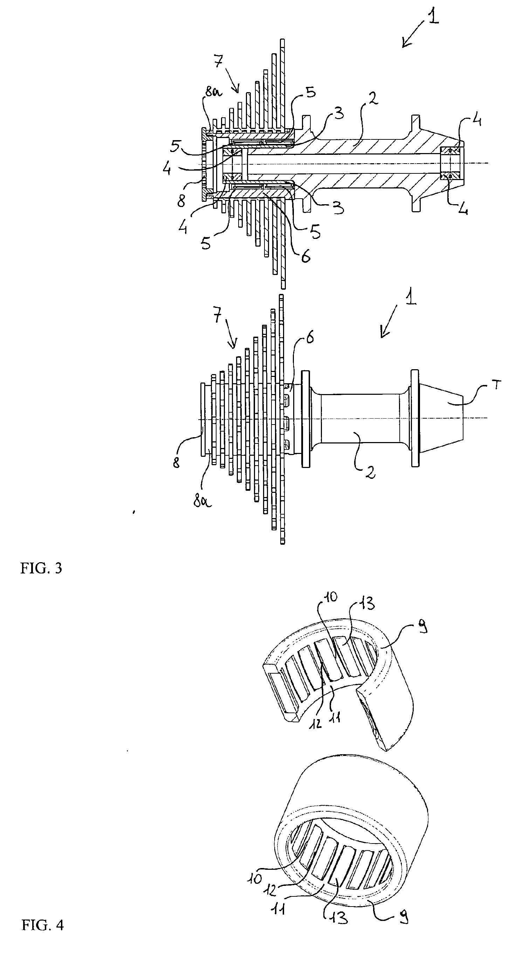

Figure 3 shows a side view and a cross section of a bicycle hub according to a preferred embodiment of the invention in which the cassette sprockets 7 is mounted on the body 6. Use of the body 6 according to the invention makes it possible to prepare, without haste and in advance, a series of bodies 6 on which different gears or sprockets 7 are mounted, depending on the type of route the cyclist intends to take. The body 6, in which one-way drawn cup roller clutches 5 are present, is inserted on the cylindrical end, or housing A, of the body 2 of the hub 1.

The bearing carrier 3, with the ball bearings 4 positioned at one end thereof, is located between the housing A and the one-way drawn cup roller clutches 5.

Once the body 6 has been mounted on the housing A of the body of the hub 2, the cassette sprockets 7 can be inserted and fastened to the body 6 by means of a spacer 8a and a lock ring 8. This lock ring 8, which locks the cassette sprockets 7 with respect to the body 6, is hollow to allow the hub axle (not shown) to pass through.

Figure 4 shows by way of example a schematic perspective view of a one-way drawn cup roller clutch 5 available on the market, such as the one manufactured by INA - Schaeffler Gruppe. These one-way drawn cup roller clutches 5 comprise outer rings 9 with thin walls, lock ramps 10, plastic cages 11, pressure springs 12 and needle rollers 13. Spring locking of each needle roller 13 guarantees constant contact between hub 2, needle roller 13 and lock ramps 10.

To summarize, the invention provides a kinematic mechanism composed as follows: a hub 1 provided with ball bearings 4 for movement with respect to an axle thereof; a bearing carrier 3 constrained on the cylindrical element A of the hub 1 and projecting axially therefrom, the bearing carrier being integral with the hub; at least one one-way drawn cup roller clutch 5 mounted on the bearing carrier 3 and rotatable with respect thereto only in the opposite direction to the movement of the hub (and of the wheel), the roller clutch or clutches moving integral with the bearing carrier and with the hub in the direction of pedalling (arrow F in Fig. 1); a body 6 mounted on the roller clutches and integral therewith; a cassette sprockets 7 mounted on the body 6 and integral therewith.

The one-way drawn cup roller clutches 5, decoupling the movement between the cassette sprockets 7 and the rear wheel (not shown), permit an integral movement only when the sprockets 7 are made to rotate in the direction of movement, while in the opposite direction they produce no movement on the wheel, which continues its movement by inertia. In this manner, with the one-way drawn cup roller clutches 5 it is possible to back-pedal or even stop pedalling without interfering with the movement of the bicycle itself and eliminating noises normally produced by the presence of pawls.

## Claims

1. Freewheel system for the hub of a bicycle or similar vehicle provided with a body, in the form of a hollow cylinder, and one-way rolling means inside the body, **characterized in that** said one-way rolling means comprise at least one one-way drawn cup roller clutch, mounted removably to one end of the hub.

2. System according to claim 1, **characterized in that** the one-way rolling means comprise two one-way drawn cup roller clutches, mounted side by side along the rotation axis thereof.

3. System according to claims 1 and 2, **characterized in that** the body with the one-way drawn cup inside is mounted directly on a portion of the hub.

4. System according to claims 1 and 2, **characterized in that** the one-way drawn cup is mounted directly in the body.

5. System according to claim 1, **characterized in that** said one-way drawn cup roller clutches are provided with outer rings with lock ramps, cages for needle roller bearings, needle rollers and pressure springs to lock the individual needle roller.

6. System according to claim 5, **characterized in that** spring locking of each needle roller guarantees constant contact between hub, needle roller and lock ramps.

7. System according to claim 1, **characterized in that** the body and freewheel do not have any type of mechanical fastening with respect to the hub.

8. Hub according to claims 1, 3, 6 and 7, **characterized in that** it comprises a housing for the body.

9. Hub according to claim 8, **characterized in that** said housing for the freewheel body and the body of the hub result in a single component.

10. Hub according to claims 8 and 9, **characterized in that** a ring for insertion of ball bearings is positioned between said housing and the freewheel body.

11. Hub according to claim 9, **characterized in that** at least one ball bearing is inserted on both ends of the body of the hub.
